Europäisches Patentamt

European Patent Office

Office européen des brevets

(19)

(11) **EP 1 585 053 A2**

(12) **EUROPEAN PATENT APPLICATION**

(43) Date of publication:
**12.10.2005 Bulletin 2005/41**

(51) Int Cl.⁷: **G06K 9/00**

(21) Application number: **05006632.3**

(22) Date of filing: **24.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.03.2004 JP 2004098457**

(71) Applicant: **SEIKO EPSON CORPORATION**
**Tokyo 163-0811 (JP)**

(72) Inventor: **Koyama, Fumio**
**Suwa-shi Nagano-ken 392-8502 (JP)**

(74) Representative: **HOFFMANN EITLE**
**Patent- und Rechtsanwälte**
**Arabellastrasse 4**
**81925 München (DE)**

(54) **Image processing device and image processing method**

(57) This is an image processing device that processes images, and that, for an image, sets multiple sets of reference pixels as references and adjacent pixels that are adjacent to these reference pixels. For each difference absolute value for each set, the total of the number of the absolute value of differences that are greater than a preset first threshold value is calculated as the edge volume. When the calculated edge volume is greater than a preset second threshold value, the aforementioned image is distinguished to be a notated image that contains text or symbols, etc. When the aforementioned edge volume is not greater than the second threshold value, the aforementioned image is distinguished to be an image other than a notated image. Therefore, with the present invention, it is possible to suitably distinguish between notated images that contain text or symbols, etc. and non-notated images other than the notated images.

Fig.1

EP 1 585 053 A2

**Description**

**BACKGROUND OF THE INVENTION**

1. Field of the Invention

The present invention relates to a technology that distinguishes between images that do contain text or symbols, etc., and images that do not.

2. Description of the Related Art

A projector projects and displays various types of images. When these kinds of images are divided into two categories according to content, for example, they can be divided into images that contain text or symbols, etc. and images that do not. Here, we will call the former notated images and the latter non-notated images. Note that as non-notated images, there are, for example, natural images such as scenic images and personal portrait images, etc. that include various designs, etc.

However, projectors perform various image processes on images. As this kind of image processing, for example, as disclosed in Japanese Patent Laid-Open Gazettes No. 6-78178, image outline correction processing is performed to express an image clearly. With this outline correction process, parameters for outline correction are set, and outline correction is performed based on those parameters. In such a case, for the aforementioned notated images, for the outline part, there is the feature of the pixel value changing greatly in terms of space, whereas on the other hand, with the non-notated images, for the outline part, there is the feature of the pixel value changing relatively smoothly. Therefore, it is desirable to set outline correction parameters that are appropriate for each image. To do this, it was necessary to suitably distinguish whether an image is a notated image or a non-notated image.

Note that the problem noted above is not limited to cases of performing outline correction, but is also a problem common to cases of performing other image processing as well. Also, the problem described above is not limited to projectors, but is a problem that is common to other image processing devices as well.

**SUMMARY OF THE INVENTION**

The object of the present invention is thus to solve the drawback of the prior art technique discussed above and to provide technology that can suitably distinguish between notated images and non-notated images.

In order to attain at least part of the above and the other related objects, the present invention is directed to an image processing device that processes images. The image processing device includes:

an edge volume calculation unit which, for the image, sets multiple sets of reference pixels which are references and adjacent pixels which are adjacent to these reference pixels, and respectively calculates the absolute value of the difference between the pixel value of the reference pixels and the pixel value of the adjacent pixels for each set, and for each difference absolute value for each set, calculates as the edge volume the total number of the difference absolute values which are greater than a preset first threshold value;

an image distinguishing unit which, when the calculated edge volume is greater than a preset second threshold value, distinguishes that image to be a notated image that contains text or symbols, etc., and when that edge volume is not greater than the second threshold value, distinguishes the image to be an image other than the notated image; and

an image processing unit that performs a specified image process on the image based on the distinguishing results.

With the image processing device of the present invention, it is possible to obtain an edge volume that shows with good precision the characteristics of the outline part, and based on this edge volume, it is possible to distinguish the image, making it possible to suitably distinguish whether an image is a notated image or an image other than a notated image.

In the image processing device, the edge volume calculation unit may include a frequency distribution table divided into multiple levels that have a specified width, for each difference absolute value calculated for each set, count the respective frequencies for each level of the frequency distribution table to which each difference absolute value belongs, and for that frequency distribution table, total the frequencies of each level that shows the difference absolute value that is greater than the first threshold value, so that calculate the edge volume.

By doing this, by creating a frequency distribution table, it is possible to easily obtain the edge volume, and based on this edge volume, to distinguish the images, so it is possible to suitably distinguish notated images and images other than notated images.

The image processing device may further include:

a parameter setting unit which, when the image distinguishing unit distinguishes the image to be a notated image, sets outline correction parameters for notated images, and when it distinguishes the image to be an image other than a notated image, sets the outline correction parameters for images other than notated images; and an outline correction unit that corrects the outline of the image based on the set outline correction parameters.

By doing this, it is possible to set the outline correction parameters according to the contents expressed in the image, and to correct the outline of the image based on these outline correction parameters, so it is possible to suitably perform outline correction.

It is also possible to equip the aforementioned image processing device with a projector.

Note that the present invention is not limited to the form of a device invention noted above, but can also be expressed in the form of a method invention. Furthermore, it is also possible to express this in various forms such as in the form of a computer program for building that method or device, in the form of a recording medium that records that kind of computer program, or in the form of a data signal that is realized within a carrier wave that includes the aforementioned computer program.

Also, when the present invention is constructed as a computer program or as a recording medium, etc. on which that computer program is recorded, it is also possible to construct this as an overall program that controls the operation of the aforementioned device, or to construct it as only a part that performs the function of the present invention.

**BRIEF DESCRIPTION OF THE DRAWINGS**

Figure 1 is a block diagram that shows the schematic structure of a projector 10 as an embodiment of the present invention.

Figure 2 is a flow chart that shows the flow of the processing performed by the projector for an embodiment of the present invention.

Figure 3 is a flow chart that shows the flow of the frequency distribution analysis process for an embodiment of the present invention.

Figure 4 is an explanatory diagram that shows the frequency distribution analysis process for an embodiment of the present invention.

Figure 5 is a diagram that shows an example of a notated image for an embodiment of the present invention.

Figure 6 is a diagram that shows the frequency distribution table Q1 for a detection line P1 of a notated image O1 of an embodiment of the present invention.

Figure 7 is a diagram that shows a histogram R1 based on the frequency distribution table Q1 of an embodiment of the present invention.

Figure 8 is a diagram that shows an example of a non-notated image for an embodiment of the present invention.

Figure 9 is a diagram that shows a frequency distribution table Q2 for a detection line P2 of a non-notated image 02 of an embodiment of the present invention.

Figure 10 is a diagram that shows a histogram R2 based on the frequency distribution table Q2 of an embodiment of the present invention.

Figure 11 is a flow chart that shows the flow of the image distinguishing process for an embodiment of the present invention.

**DESCRIPTION OF THE PREFERRED EMBODIMENTS**

Some modes of carrying out the invention are discussed below as preferred embodiments in the following sequence.

A. Structure of the Projector:
B. Process Flow:

B1. Process Summary:
B2. Frequency Distribution Analysis Process:
B3. Image Distinguishing Process:
B4. Outline Correction Parameter Setting Process:

B5. Outline Correction Process:

C. Effect of Embodiments:
D. Variation Examples:

A. Structure of the Projector:

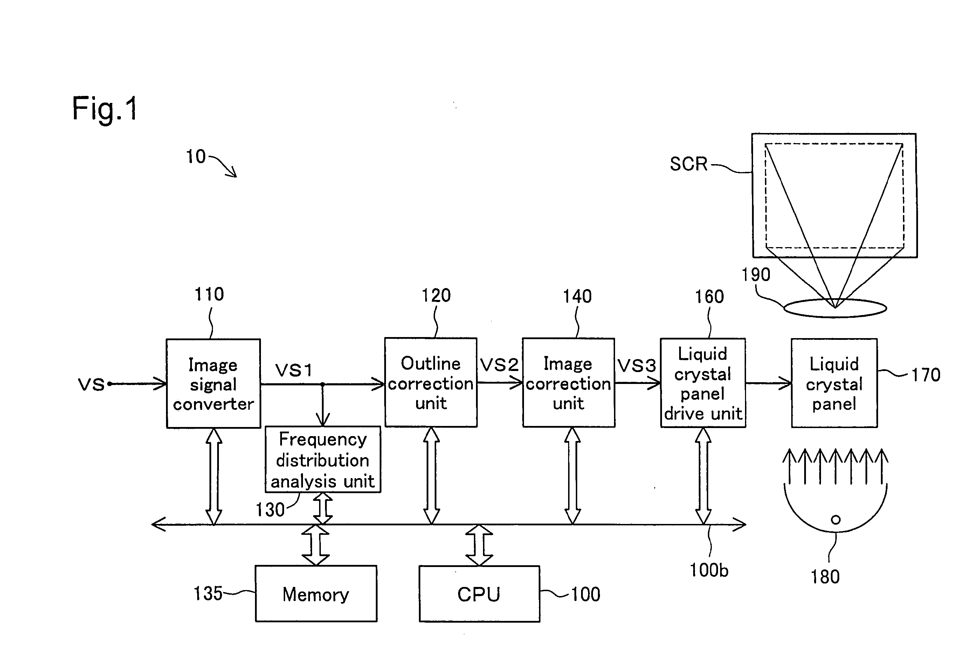

Figure 1 is a block diagram that shows the schematic structure of a projector 10 as an embodiment of the present invention. This projector 10 comprises a CPU 100, an image signal converter 110, an outline correction unit 120, a frequency distribution analysis unit 130, a memory 135, an image correction unit 140, a liquid crystal panel drive unit 160, a liquid crystal panel 170, an illumination optical system 180, and a projection optical system 190. This projector 10 displays images by projecting onto a screen SCR via the projection optical system 190 three colors red (R), green (G), and blue (B) emitted for each pixel from the liquid crystal panel 170.

The CPU 100 controls the operation of the image signal converter 110, the outline correction unit 120, the frequency distribution analysis unit 130, the memory 135, the image correction unit 140, and the liquid crystal panel drive unit 160 via a bus 100b. Also, the CPU 100 performs the image distinguishing process and the outline correction parameter setting process that will be described later.

The memory 135 is non-volatile memory, and in it are stored notated image outline correction parameters and non-notated image outline correction parameters to be described later. The liquid crystal panel driver unit 160 drives the liquid crystal panel 170 based on the input image signal.

The image signal converter 110, the outline correction unit 120, the frequency distribution analysis unit 130, and the image correction unit 140 are formed from specified circuits made from LSIs, etc.

The image signal converter 110 performs the image signal conversion process to be described alter, the frequency distribution analysis unit 130 performs the frequency distribution analysis process to be described later, the outline correction unit 120 performs the outline correction process to be described later, and the image correction unit 140 performs the image correction process to be described later.

We will explain the details of the operation of each of the parts described above together with the flow of the processes for this embodiment shown below.

B. Process Flow:

B1. Process Summary:

After performing specified conversion processing on the input image signal, the projector 10 of this embodiment creates a frequency distribution table based on the image signal after that conversion process. Next, the projector 10 distinguishes whether the image shown by the image signal is a notated image or a non-notated image based on the created frequency distribution table.

Here, a notated image means an image that contains text or symbols, etc. Here, text means words or speech sounds in a form that can be seen by the eye, means items such as *kanji* (Chinese character), numbers, *hiragana* (Japanese character), *katakana* (Japanese character), and Roman letters, and notation of words of other countries such as in the Korean alphabet, and means items that notate ancient words such as hieroglyphics. Symbols means recognizable objects that have a role working to show a set phenomenon or contents as a substitute or vicariously, and means something that shows some kind of sign, signal, or symbol, etc. Also, for this embodiment, the notated images are a concept that includes images that contain frame lines for tables, graph lines for graphs, and graph axes, etc.

Also, non-notated images means images other than notated images. Included in non-notated images are, for example, natural images such as scenic images and personal portrait images, etc. that include various designs, etc., and CG images such as virtual images, etc.

Next, the projector 10, when the image shown by the image signal is a notated image, sets a notated image outline correction parameter as the outline correction parameter, and when the image shown by the image signal is a non-notated image, sets a non-notated image outline correction parameter. Then, it does outline correction of the image shown by the image signal based on the set outline correction parameters. After that, a specified image correction is performed, and that image is projected and displayed on a screen.

Now, we will give a detailed explanation of the processes below.

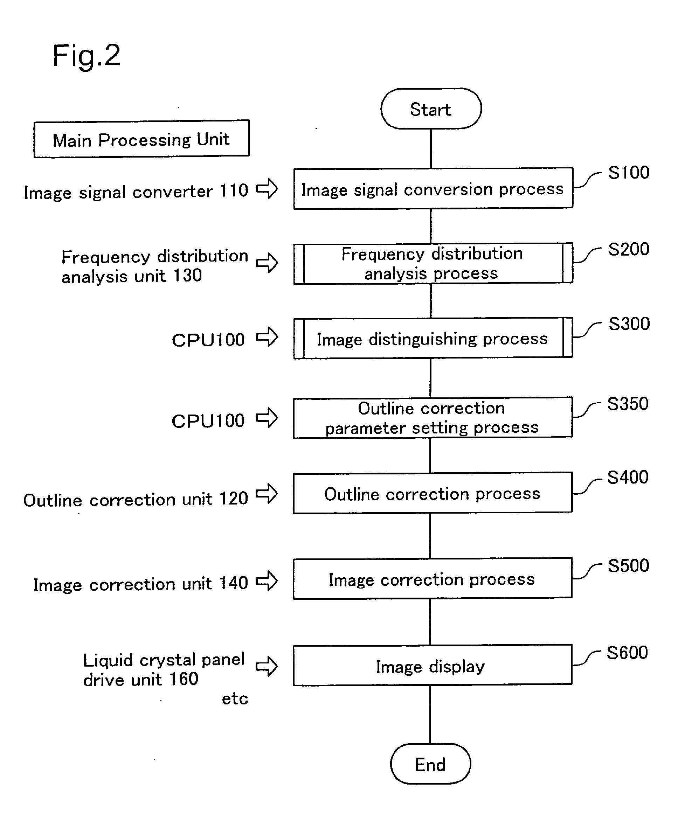

Figure 2 is a flow chart that shows the flow of the processes performed by the projector for this embodiment.

First, the image signal converter 110 performs the image signal conversion process with the process at step S100. Specifically, when the image signal converter 110 has image signals VS input from outside, when these signals are analog signals, analog/digital conversion is performed, and frame rate conversion or resize processing is performed according to the signal format of these signals. The image signal converter 110, when the input image signals VS are composite signals, demodulates those composite signals, and performs separation processing on color (R, G, B) signals and synchronous signals. After performing these processes, the image signal converter 110 outputs as image signal VS1 to the outline correction unit 120 and the frequency distribution analysis unit 130.

Note that the image data shown by the image signal VS1 is formed by gradation data (hereafter also called "image data') that shows gradation values of each pixel in a dot matrix form (hereafter also called "pixel value"). The pixel data is YCbCr data consisting of Y (brightness), Cb (blue color difference), and Cr (red color difference) and RGB data consisting of R (red), G (green), and B (blue), etc. Also, the pixel values are shown as 8 bits, specifically, as numerical values from 0 to 255.

B2. Frequency Distribution Analysis Process:

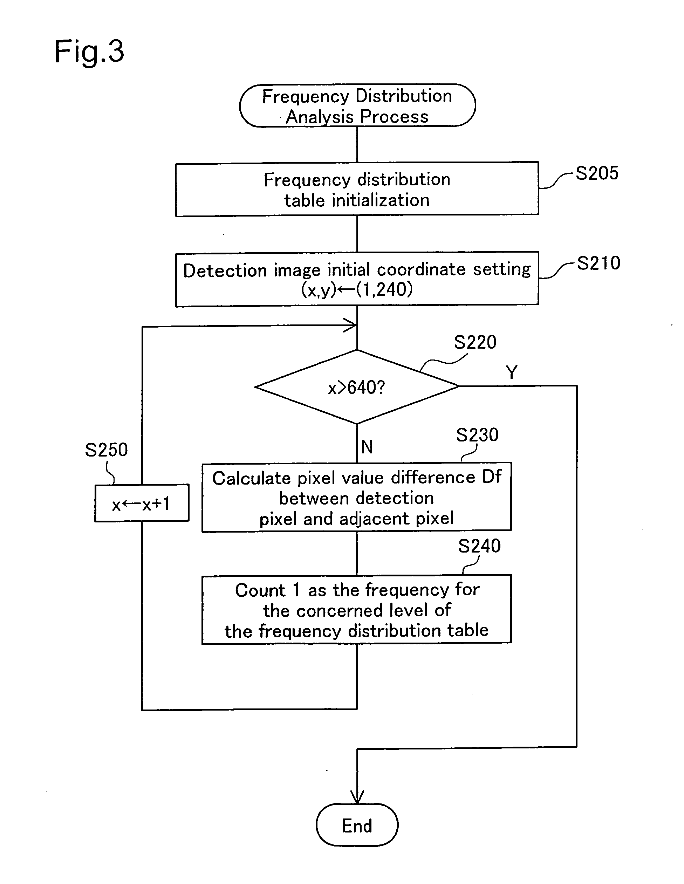

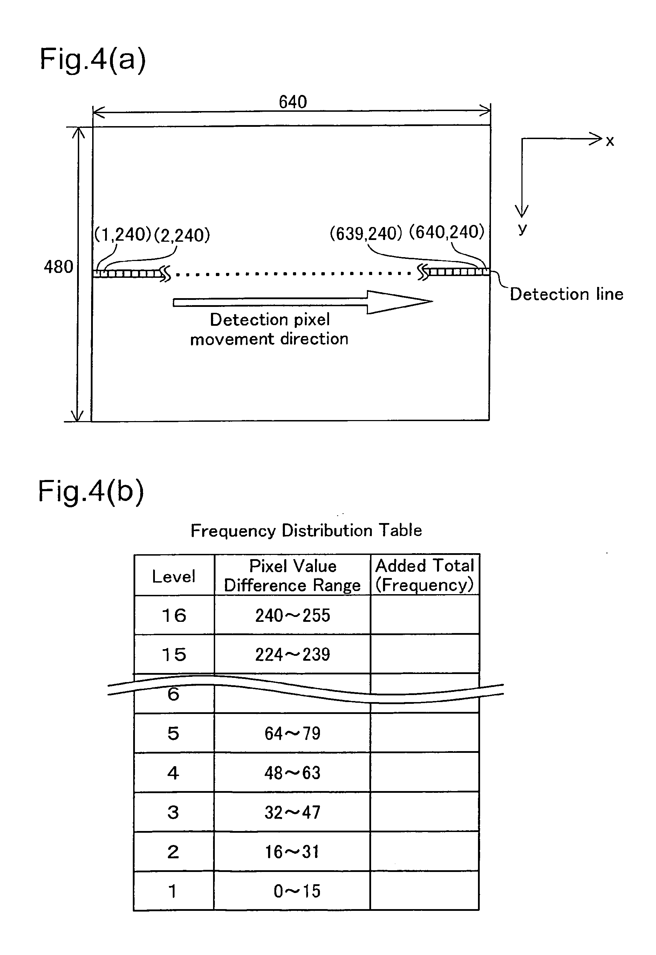

Next, with the process at step S200 (figure 2), the frequency distribution analysis unit 130 performs frequency distribution analysis processing that creates a frequency distribution table based on the image shown by the input image signal VS1. With this frequency distribution analysis process, the one central horizontal line of the image shown by the image signal VS1 is set as the detection line, and all of the pixels on that detection line are set as detection pixels. Then, the absolute value of the difference between those detection pixels and the pixels adjacent at left and right of the detection pixels is obtained, these are counted as frequency in the frequency distribution table to be described later, and the frequency distribution table is completed. We will give a detailed explanation of this frequency distribution analysis process using figures 3 and 4 for reference.

Figure 3 is a flow chart that shows the flow of the frequency distribution analysis process for this embodiment.

Figure 4 is an explanatory diagram that shows the frequency distribution analysis process for this embodiment. (a) shows the image shown by the image signal VS 1. With this embodiment, this image is an image for which the resolution is 640 x 480. As shown in figure 4 (a), for the central line of this image ($1 \leq x \leq 640$, y = 240), the detection lines for which the detection pixels are set for creating the frequency distribution table are shown. Figure 4 (b) shows the frequency distribution table. As shown in figure 4 (b), this frequency distribution table is divided into 16 levels each having a core width of 15 within a range of 0 to 255 as the pixel value difference range, and the calculated pixel value difference Df to be described later is a value that counts which level this belongs to. Also, a level number is allocated from 1 to 16 for each level, and the smaller the level number is for a level, which shows that the level has a low level pixel value difference value, and the larger the level number is for a level, this shows that the level has a high level pixel value difference value.

First, with the process at step S205, the frequency distribution analysis unit 130 initializes the frequency distribution table, specifically, it returns the frequency of each level to 0.

Next, at the process of step S210, the frequency distribution analysis unit 130 sets the initial coordinates of the detection pixels as (x, y) = (1, 240) (figure 4 (a)). By setting in this way, the initial coordinates of the detection pixels shows the left edge coordinates for the detection line of the image shown by the image signal VS1.

Next, at the process of step S220, the frequency distribution analysis unit 130 judges that x is 640 or greater. Specifically, the detection pixel comes to the furthest right side coordinate of the detection line, and a judgment is made of whether the frequency is counted in the frequency distribution table for all the detection pixels.

When the detection pixel is an initial coordinate, x is smaller than 640 (step S220: No), so next, at the process of step S230, the frequency distribution analysis unit 130 calculates using the equation (1) the pixel value difference Df (x, y) which takes the absolute value of the difference between the pixel value of the detection pixel (x, y) and the pixel value of the adjacent pixel (x + 1, y) that is adjacent to the right of this detection pixel. Note that in this case, the pixel value of the detection pixel (x, y) is F (x, y) and the pixel value of the adjacent pixel (x + 1, y) is G (x + 1, y).

$$\text{Pixel value difference Df (x, y) = |F (x, y) - G (x + 1, y)|} \tag{1}$$

Next, with the process at step S240, the frequency distribution analysis unit 130 counts (adds) "1" as the frequency to the level of the frequency distribution table (figure 4 (b)) that correlates to the calculate pixel value difference Df. For example, with the process described above, if the pixel value difference Df is calculated as "20," 1 is counted (added) as the frequency to level 2 for which the pixel value difference range shows 16 to 31.

After counting the frequency in the frequency distribution table, with the process at step S250, the frequency distribution analysis unit 130 adds 1 to x, specifically, it shifts the detection pixel in parallel by 1 in the x direction.

By working as described above, the frequency distribution analysis unit 130 counts 1 for the frequency in the frequency distribution table for the detection pixel, and moves the detection pixel in parallel by 1 in the x direction, and again calculates the pixel value difference Df, and counts 1 for the frequency in the frequency distribution table. Then, when x is 640 or greater, specifically, when the detection pixel is the coordinate at the farthest right side of the detection line (640, 240) (figure 4 (a)), and when the frequency has been counted for the frequency distribution table for all the detection pixels (step S220: Yes), the frequency distribution analysis unit 130 ends this frequency distribution regenerating process and returns to the main flow (figure 2).

B3. Image Distinguishing Process:

When the frequency distribution analysis process ends, next, the CPU 100 performs image distinguishing processing with the process at step S300 (figure 2). With this image distinguishing process, the CPU 100 distinguishes whether the image shown by the image signal VS1 is a notated image or a non-notated image.

However, for notated images, with the outline part such as text or symbols, etc. in that image, there is a characteristic of mostly rapid changing of the image values for the text or symbol, etc. parts and the background parts. On the other hand, for the non-notated images, with the outline part that shows a design, etc. expressed in that image, there is a characteristic of mostly relatively smooth change for the image values. In this way, notated images and non-notated images have different characteristics. Therefore, the CPU 100 makes use of these different characteristics for this image distinguishing process, and as described below, distinguishes whether the image shown by the image signal VS1 is a notated image or a non-notated image.

First, we will explain a case of distinguishing as a notated image.

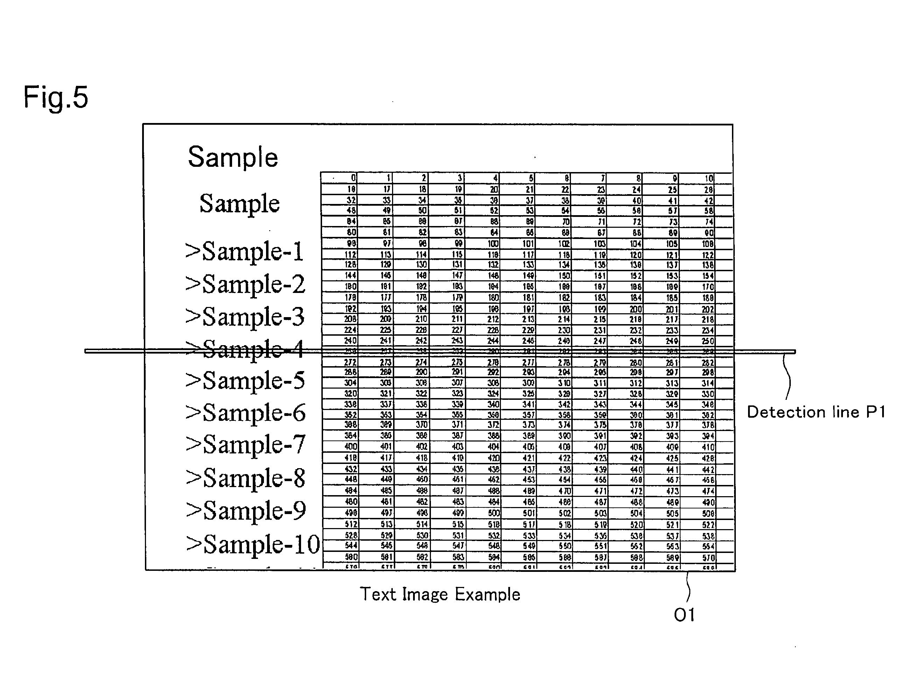

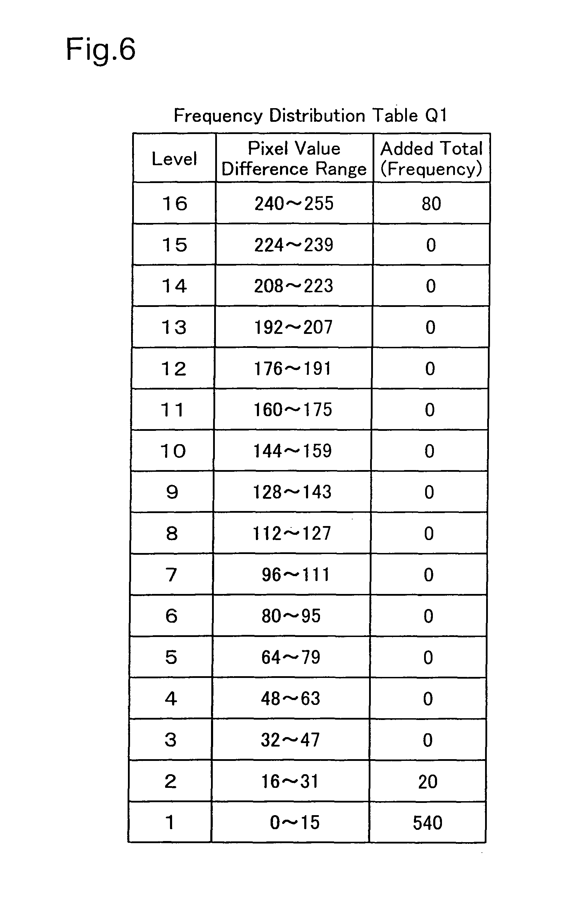

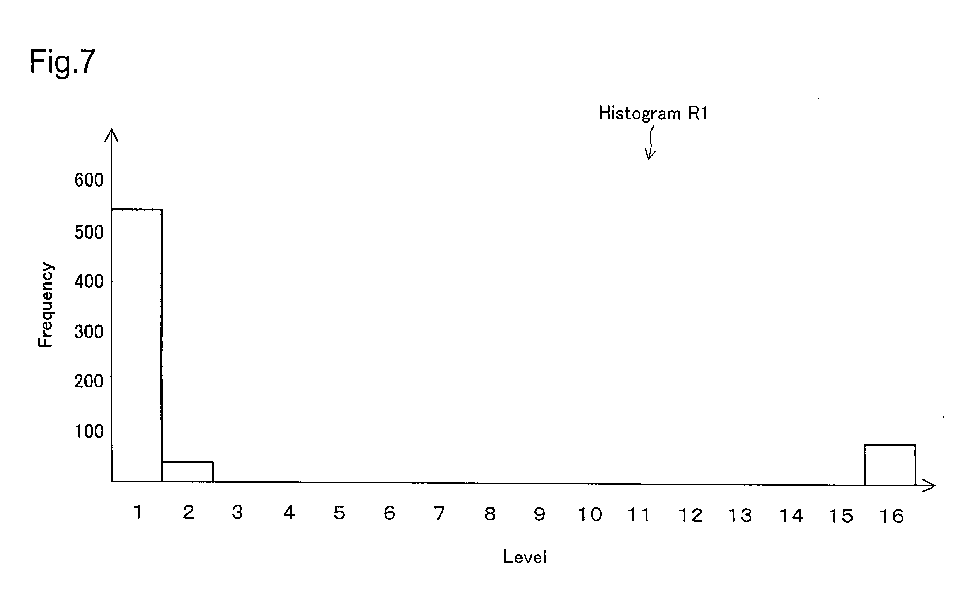

Figure 5 is a diagram that shows an example of a notated image for this embodiment. This image, the same as the image described above, is an image with resolution 640 x 480. As shown in the figure, a table created with a certain application is shown in this notated image O1, with the background shown as white, and the numbers in the table and alphabet letters outside the table shown as black. Also, a detection line P1 is shown in the center line of this notated image O1. At this detection line P1, the frequency distribution analysis process described above (figure 3) is performed, and the frequency distribution table Q1 created as a result is shown in figure 6, and furthermore, a histogram R1 based on that frequency distribution table Q1 is shown in figure 7.

Figure 6 is a diagram that shows the frequency distribution table Q1 for the detection line P1 of the notated image O1 of this embodiment. As shown in the figure, with this frequency distribution table Q1, level 1 is frequency 540, level 2 is frequency 20, and level 16 is frequency 80.

Figure 7 is a diagram that shows a histogram R1 based on the frequency distribution table Q1 of this embodiment. This histogram R1 shows the frequency count for each level for the frequency distribution table Q1. As shown in this histogram R1, in addition to level 1 and level 2 which have low level numbers, many frequencies are also shown for level 16 which is a high level number. However, as described above, the higher the level number a level has, the higher level the value of the pixel value difference that a level shows. Then, for this image, the part for which spatial changes occur for an image value is the outline part. Therefore, the fact that there are many frequencies for levels that have a high level number in the frequency distribution table means that there are many parts for which rapid image value changes are occurring with the image outline part, and this, as described above, matches the characteristics of notated images. From the above, when there are many frequencies for levels with high level numbers in the frequency distribution table, it is possible to distinguish that the image shown by the image signal VS1 is a notated image.

Next, we will explain a case of distinguishing as a non-notated image.

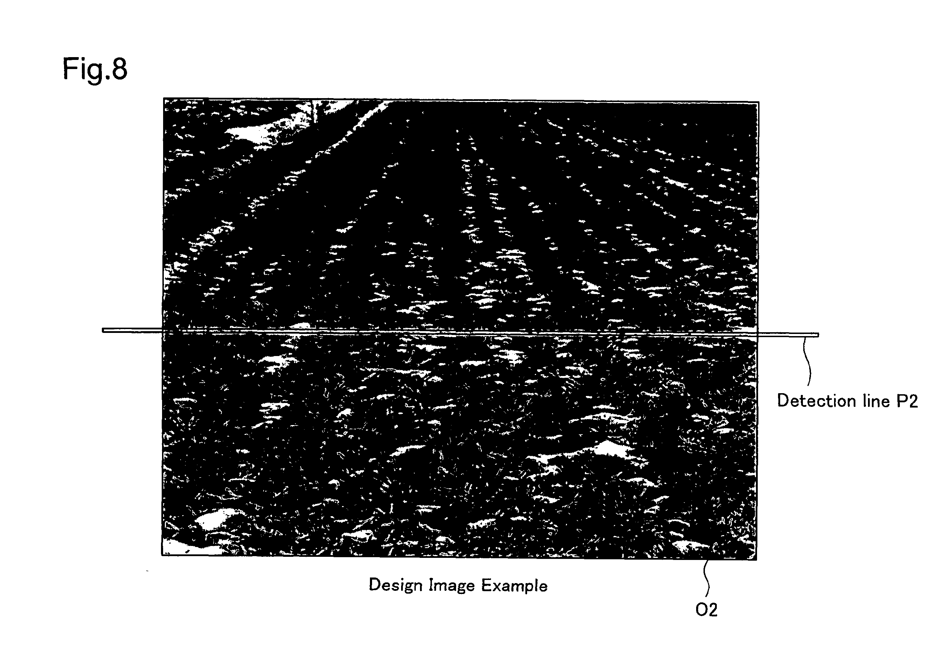

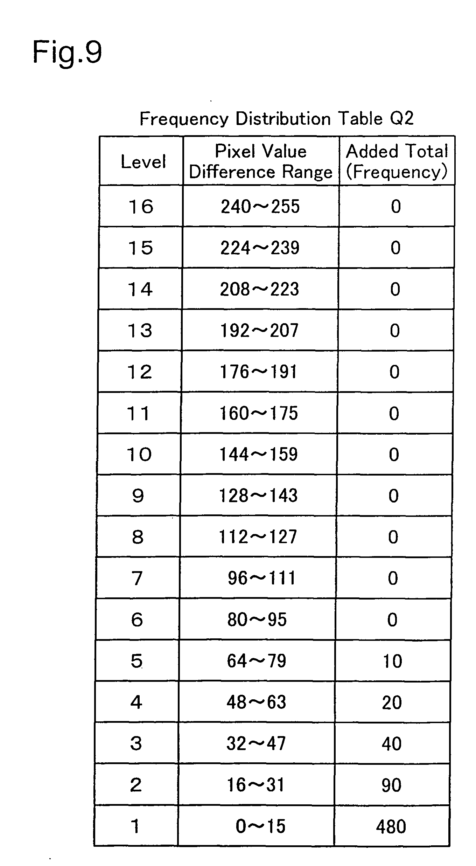

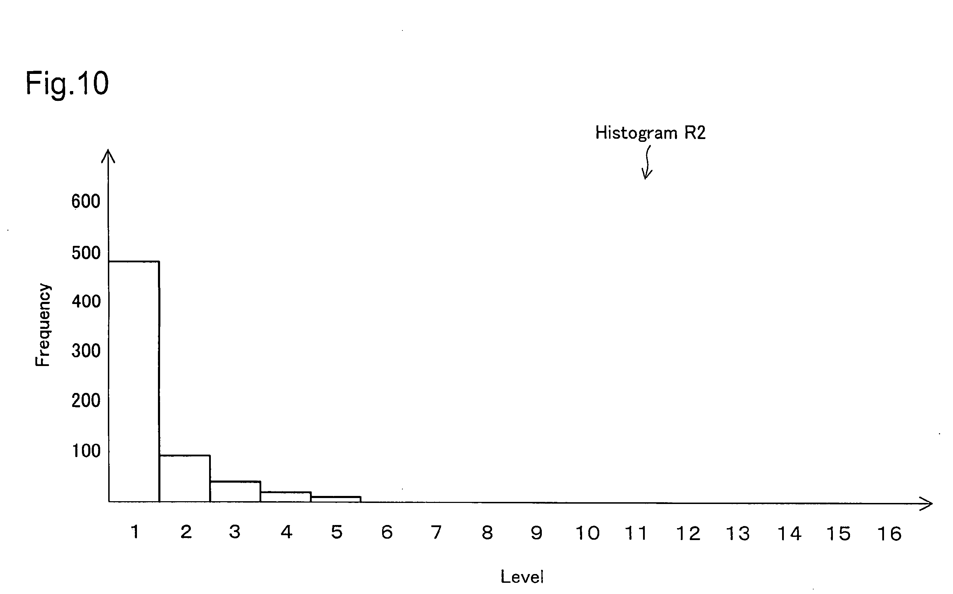

Figure 8 is a figure that shows an example of a non-notated image for this embodiment. This image, the same as in the image described above, is an image of resolution 640 x 480. As shown in the figure, the non-notated image 02 is a certain scenic image. Also, the detection line P2 is shown in the center of this non-notated image 02. For this detection line P2, the frequency distribution analysis process (figure 3) described above is performed, and the frequency distribution table Q2 created as a result is shown in figure 9, and furthermore, the histogram R1 based on that frequency distribution table Q1 is shown in figure 10.

Figure 9 is a diagram that shows the frequency distribution table Q2 for the detection line P2 of the non-notated image 02 of this embodiment. As shown in the figure, with this frequency distribution table Q2, level 1 is frequency 480, level 2 is frequency 90, level 3 is frequency 40, level 4 is frequency 20, and level 5 is frequency 10.

Figure 10 is a diagram that shows a histogram R2 based on the frequency distribution table Q2 of this embodiment. This histogram R2 shows the frequency count for each level for the frequency distribution table Q2. As shown in this histogram R2, the frequency is shown only in level 1 to level 5, with low level numbers, and meanwhile, at the levels from level number 6 and thereafter, no frequency is shown. However, as described above, the lower the level number of a level, the lower level that is shown for the value of the pixel value difference of that level. Specifically, when a level has a low level number, the pixel value is shown to change smoothly spatially. Therefore, there are many frequencies at levels with low level numbers in the frequency distribution table, and there are almost no frequencies for levels with high level numbers, and this shows that there are many parts for which the pixel value change is relatively smooth at the outline part of the image, and as described above, this matches the characteristics of non-notated images. From the above, when there are many frequencies for levels that have low level numbers in the frequency distribution table, and there are almost no frequencies for levels that have high level numbers, it is possible to distinguish that the image shown by the image signal VS1 is a non-notated image.

From the above, when there are many frequencies for levels higher than a specified level number for a level number in the frequency distribution table, it is possible to distinguish that an image shown by the image signal VS1 is a notated image, and on the other hand, when there are almost no frequencies for levels higher than a specified level number for a level number, it is possible to distinguish that the image shown by the image signal VS 1 is a non-notated image.

However, as described above, in the case of a notated image, as shown in figure 7, of the levels that show large level numbers, many frequencies are only detected for level number 16. However, there are various images also in notated images, for example, depending on the shading, etc. such as the text or symbols, etc. in an image, this is not limited to detection of frequencies only in the level of level number 16, and it is also possible to consider variance, with detection of many frequencies at levels with lower level numbers.

In light of this, with this embodiment, for each level for level numbers of 8 or greater in the frequency distribution table, their frequencies are totaled as levels of high level numbers as described above. Then, if this total is greater than a specified threshold value, as an item with many frequencies at levels for which the level number is high in the frequency distribution table, the image shown by the image signal VS1 is distinguished as a notated image. On the other hand, if that total is lower than a specified threshold value, as an item for which there are many frequencies at levels with a low level number in the frequency distribution table and with almost no frequencies for levels with a high level number, the image shown by the image signal VS1 is distinguished as a non-notated image.

Now, we will explain in detail below this image distinguishing process.

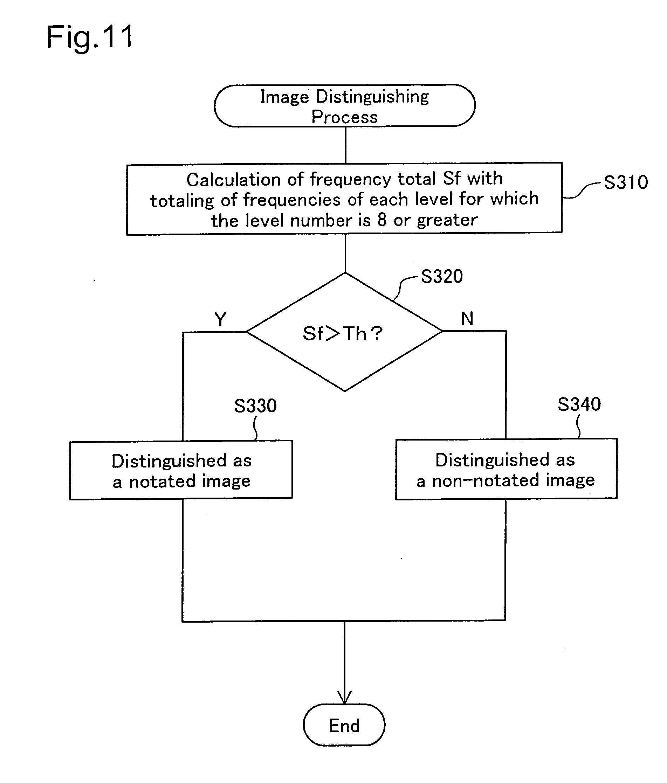

Figure 11 is a flow chart that shows the flow of the image distinguishing process for this embodiment.

First, with the process at step S310, the CPU 100 calculates the frequency total Sf for which the frequencies of each level for which the level number is 8 or greater was totaled for the obtained frequency distribution table. Note that this frequency total Sf is the edge volume that shows spatial changes in the pixel value of the image outline part.

Next, with the process at step S320, the CPU 100 judges whether or not the calculated frequency total Sf is greater than a preset threshold value Th. Note that this threshold value Th is preferably set at a numerical value showing 0.1 % to 10 % of the total frequencies (640 frequencies) for the frequency distribution table, specifically, from 6 to 64 frequencies.

When the calculated frequency total Sf is greater than the preset threshold value Th (step S320: Yes), the CPU 100 judges that there are many frequencies in levels for which the level number is high, and distinguishes the image shown by the image signal VS1 to be a notated image (step S330).

Meanwhile, when the calculated frequency total Sf is not greater than the preset threshold value Th (step S320: No), the CPU 100 judges that there are many frequencies in levels for which the level number is low, and that there are almost no frequencies in levels for which the level number is high, and distinguishes the image shown by the image signal VS1 to be a non-notated image (step S340).

B4. Outline Correction Parameter Setting Process:

When the image distinguishing process ends, next, with the process at step S350 (figure 2), the CPU 100 performs outline correction parameter setting processing. Specifically, with the image distinguishing process described above, when the CPU 100 distinguishes the image shown by the image signal VS 1 to be a notated image, it reads the notated image outline correction parameters stored in the memory 135, and sends them to the outline correction unit 120. Meanwhile, when the CPU 100 distinguishes that the image shown by the image signal VS1 is a non-notated image, it reads the non-notated image outline parameters stored in the memory 135, and sends them to the outline correction unit 120. By doing this, either the notated image outline correction parameters or the non-notated image outline correction parameters are set as parameters for performing outline correction at the outline correction unit 120.

B5. Outline Correction Process:

When the outline correction parameter setting process ends, next, with the process at step S400 (figure 2), the outline correction unit 120 performs outline correction processing. As parameters for outline correction used with this outline correction process, the notated image outline correction parameters are used for correcting the outline parts for which the pixel value changes rapidly such as the text or symbols, etc. contained in the notated image, and the non-notated image outline correction parameters are used for correcting the outline parts for which the pixel value changes relatively smoothly for designs expressed in non-notated images. For this outline correction process, the outline correction unit 120 performs outline correction based on the notated image outline correction parameters or based on non-notated image outline correction parameters supplied from the CPU 100 for images shown by the input image signal VS1. Specifically, when notated image outline correction parameters are supplied from the CPU 100 to the outline correction unit 120, the image shown by the image signal VS1 is a notated image, and the outline parts such as text and symbols, etc. contained in the notated image are corrected using the notated image outline correction parameters. When non-notated image outline correction parameters are supplied from the CPU 100 to the outline correction unit 120, the image shown by the image signal VS1 is a non-notated image, and the outline parts of the designs expressed in the non-notated image are corrected. After the outline correction, the outline correction unit 120 outputs the outline corrected image as the image signal VS2 to the image correction unit 140.

When the outline correction process ends, next, the image correction unit 140 performs image correction processing with the process at step S500 (figure 2). The image correction unit 140 is equipped with a lookup table. With this image compensation process, correction of the image shown by the image signal VS2 that was output from the outline correction unit 120 is performed, and the image after that correction is output as an image signal VS3. Note that the image correction unit 140 implements $\Gamma$ correction taking into consideration the liquid crystal panel VT characteristics (voltage-transmissivity characteristics) on the image shown by the image signal VS2, for example. Note that when the image correction unit 140 is given image adjustment requests from the user via the image adjustment panel (not illustrated) provided on the projector 10, it performs adjustments such as brightness, contrast, and shading of the aforementioned image as well.

Next, with the process at step S600 (figure 2), an image is displayed on the screen SCR by a liquid crystal panel drive unit 160, etc. Specifically, first, the liquid crystal panel drive unit 160 drives the liquid crystal panel 170 based on the image signal VS3 that is output from the image correction unit 140. Then, the driven liquid crystal panel 170 modulates the illumination light from the illumination optical system 180 according to the image signal VS3. The light that was modulated by the liquid crystal panel 170 is emitted toward the screen SCR by the projection optical system 190, and an image is displayed on the screen SCR.

Note that the flow of the serial process from the aforementioned step S 100 to step S600, for example, was described in the sequence of the process flow on a frame of one image, and with operation of an actual image device, each of the processes is performed in parallel on a specified frame image.

Note that though omitted from the illustration, the liquid crystal panel 170 contains three liquid crystal panels corresponding to the three colors RGB. Because of this, each circuit of the image signal converter 110 and the liquid crystal panel drive unit 160 has a function of processing the image signals of three colors RGB. Also, the illumination optical system 180 has a color light separation optical system that separates the light source light into light of three colors, and the projection optical system 190 has a synthesizing optical system and a projection lens that synthesize three colors of image light and generate image light that shows a color image. Note that for the structure of this kind of projector optical system, it is possible to use a variety of typical projector optical systems.

C. Effect of Embodiments:

As described above, the projector 10 of this embodiment calculates a frequency total Sf for which the frequencies of each level for which the level number is 8 or greater are totaled in the frequency distribution table, and compares this frequency total Sf and the threshold value Th. By doing this, when the frequency total Sf is greater than the threshold value Th, it is possible to judge that there are many frequencies for levels for which the level number is high, and this matches the characteristics of notated images, so it is possible to suitably distinguish the image shown by the image signal as a notated image. Also, when the frequency total Sf is not greater than the threshold value Th, it is possible to judge that there are many frequencies for levels for which the level number is low, and that there are almost no frequencies for levels for which the level number is high, and this matches the characteristics of non-notated images, so it is possible to suitably distinguish the image shown by the image signal as a non-notated image.

Also, when the projector 10 of this embodiment distinguishes whether or not the image shown by the input image signal is a notated image or a non-notated image and distinguishes it to be a notated image, it sets the notated image outline correction parameters, and when it distinguishes the aforementioned image to be a non-notated image, it sets the non-notated image outline correction parameters. Then, using the set outline correction parameters, outline correction is done on the aforementioned image. By working in this way, whether the image input to the projector 10 is a notated image or a non-notated image, it is possible to suitably perform outline correction accordingly for each.

D. Variation Examples:

The above embodiments and their applications are to be considered in all aspects as illustrative and not restrictive. There may be many modifications, changes, and alterations without departing from the scope or spirit of the main characteristics of the present invention. All changes within the meaning and range of equivalency of the claims are therefore intended to be embraced therein.

D1. Variation Example 1:

With the embodiments noted above, the frequency distribution table (figure 4 (b)) is created with one detection line, but the present invention is not limited to this. For example, for the image, it is also possible to create a frequency distribution table with multiple lines or with all the lines as detection lines. It is also possible to create a frequency distribution table from multiple screens rather than from one screen. When using a frequency distribution table created in this way as well, as described above, it is possible to distinguish whether an image shown by the image signal VS1 is a notated image or a non-notated image.

D2. Variation Example 2:

For the embodiments noted above, the center line (horizontal line) was used as the detection line, but the present invention is not limited to this, and it is possible to have any line be the detection line, or to use vertical lines as the detection line as well.

D3. Variation Example 3:

With the embodiments noted above, for the image distinguishing process, the CPU 100 calculated a frequency total Sf by totaling the frequencies of each level for frequency numbers of 8 or greater with the level number 8 as a branching point for the frequency distribution table, but the present invention is not limited to this. For example, the aforementioned branching point can be any of the level numbers from 4 to 15 to calculate the aforementioned frequency total Sf. When using a frequency total Sf calculated this way as well, by comparing with the threshold value Th, it is possible to distinguish between notated images and non-notated images.

D4. Variation Example 4:

With the aforementioned embodiments, the CPU 100 distinguishes whether the image shown by the image signal VS1 is a notated image or a non-notated image (figure 11, step S320), reads either notate image or non-notated image outline correction parameters from the memory 135 based on those distinguishing results, and the outline correction parameters were set by sending this to the outline correction unit 120, but the present invention is not limited to this. For example, it is also possible to have the notated image or non-notated image outline correction parameters be stored in a specified memory (not illustrated) within the outline correction unit 120, and based on the aforementioned distinguishing results, have the CPU 100 specify the notated image or non-notated image outline correction parameters stored within the outline correction unit 120, and to have the outline correction parameters set at the outline correction unit 120.

D5. Variation Example 5:

With the aforementioned embodiments, the projector 10 was equipped with each of the functions of a frequency distribution analysis unit 130, an outline correction unit 120, a memory 135, and a CPU 100, but each of these functions may also be provided in various image generating devices such as a video camera, a digital camera, or a portable phone with a camera, and it is also possible to provide this in an image output device such as a printer, an LCD display, a DVD player, a video tape player, or a had disk player, etc.

D6. Variation Example 6:

With the aforementioned embodiments, the CPU 100 distinguishes whether an image shown by the image signal VS1 is a notated image or a non-notated image, and based on those distinguishing results, sets the outline correction parameters, but the present invention is not limited to this, and it is also possible to perform various image processes based on the aforementioned distinguishing results. For example, when the aforementioned distinguishing results are a notated image, the CPU 100 may also perform image processing that enhances that part such as increasing the tone or contrast of a text part or symbol part within that notated image.

D7. Variation Example 7:

With the aforementioned embodiments, it is also possible to replace part of the structure realized using hardware with software, and conversely to replace part of the structure realized using software with hardware.

**Claims**

1. An image processing device that processes images, comprising:

an edge volume calculation unit which, for the image, sets multiple sets of reference pixels which are references and adjacent pixels which are adjacent to these reference pixels, and respectively calculates the absolute value of the difference between the pixel value of the reference pixels and the pixel value of the adjacent pixels for each set, and for each difference absolute value for each set, calculates as the edge volume the total number of the difference absolute values which are greater than a preset first threshold value;

an image distinguishing unit which, when the calculated edge volume is greater than a preset second threshold value, distinguishes that image to be a notated image that contains text or symbols, etc., and when that edge volume is not greater than the second threshold value, distinguishes the image to be an image other than the notated image; and

an image processing unit that performs a specified image process on the image based on the distinguishing results.

2. The image processing device according to claim 1, wherein

the edge volume calculation unit comprises a frequency distribution table divided into multiple levels that have a specified width, for each difference absolute value calculated for each set, counts the respective frequencies for each level of the frequency distribution table to which each difference absolute value belongs, and for that frequency distribution table, totals the frequencies of each level that shows the difference absolute value that is greater than the first threshold value, so that calculates the edge volume.

3. The image processing device according to claim 1 or 2, further comprising:

a parameter setting unit which, when the image distinguishing unit distinguishes the image to be a notated image, sets outline correction parameters for notated images, and when it distinguishes the image to be an image other than a notated image, sets the outline correction parameters for images other than notated images; and

an outline correction unit that corrects the outline of the image based on the set outline correction parameters.

4. A projector comprising the image processing device according to any one of claims 1 through 3.

5. A method of processing images, comprising the steps of:

(a) setting multiple sets of reference pixels that are references and adjacent pixels that are adjacent to these reference pixels for the image, calculating the respective absolute values of the difference between the pixel value of the reference pixels and the pixel value of the adjacent pixels for each set, and for each absolute value of the difference of each set, calculating as the edge volume the total number of the absolute value of the differences which are greater than a preset first threshold;

(b) distinguishing an image to be a notated image that contains text or symbols, etc. when the calculated edge volume is greater than a preset second threshold value, and distinguishing the image to be an image other than a notated image when the edge volume is not greater than the second threshold value; and

(c) performing specified image processing on the image based on the distinguishing results.

6. A computer program product for processing images, comprising:

a first program code that, for the image, sets multiple sets of reference pixels that are references and adjacent pixels that are adjacent to these reference pixels, calculates the respective absolute values of the difference between the pixel value of the reference pixels and the pixel value of the adjacent pixels for each set, and for each absolute value of the difference of each set, calculates as the edge volume the total number of the absolute value of the differences which are greater than a preset first threshold;

a second program code that distinguishes an image to be a notated image that contains text or symbols, etc. when the calculated edge volume is greater than a preset second threshold value, and distinguishes the image to be an image other than a notated image when the edge volume is not greater than the second threshold value;

a third program code that performs specified image processing on the image based on the distinguishing results; and

a computer readable medium that stores the program codes.

# Fig.1

10

SCR

190

| 110 | 120 | 140 | 160 |
|---|---|---|---|

VS → Image signal converter → VS1 → Outline correction unit → VS2 → Image correction unit → VS3 → Liquid crystal panel drive unit → Liquid crystal panel ~170

Frequency distribution analysis unit

130

Memory ~135

CPU ~100

100b

180

EP 1 585 053 A2

12

## Fig.2

| Main Processing Unit | |
|---|---|
| Image signal converter 110 ⇨ | Start |
| | **Image signal conversion process** — S100 |
| Frequency distribution analysis unit 130 ⇨ | **Frequency distribution analysis process** — S200 |
| CPU100 ⇨ | **Image distinguishing process** — S300 |
| CPU100 ⇨ | **Outline correction parameter setting process** — S350 |
| Outline correction unit 120 ⇨ | **Outline correction process** — S400 |
| Image correction unit 140 ⇨ | **Image correction process** — S500 |
| Liquid crystal panel drive unit 160 etc ⇨ | **Image display** — S600 |
| | End |

# Fig.3

```
        ╭─────────────────────────╮
        │  Frequency Distribution │
        │    Analysis Process     │
        ╰─────────────────────────╯
                    │
    ┌───────────────────────────────┐
    │    Frequency distribution     │──S205
    │     table initialization      │
    └───────────────────────────────┘
                    │
    ┌───────────────────────────────┐
    │ Detection image initial       │──S210
    │ coordinate setting            │
    │        (x,y)←(1,240)          │
    └───────────────────────────────┘
                    │
        ┌───────────◄───────────────────────┐
        │                                    │
        ▼                                    │
    ╱───────────────╲  S220          Y       │
   ╱    x>640?        ╲──────────────────────┼──┐
   ╲                 ╱                       │  │
    ╲───────────────╱                        │  │
        │ N          S230                     │  │
        ▼                                     │  │
    ┌───────────────────────────────┐         │  │
    │ Calculate pixel value         │         │  │
    │ difference Df between          │  ┌──────┘  │
    │ detection pixel and            │  │ S250    │
    │ adjacent pixel                 │  ▼         │
    └───────────────────────────────┘  ┌───────┐ │
        │                  S240         │x←x+1  │ │
        ▼                               └───────┘ │
    ┌───────────────────────────────┐             │
    │ Count 1 as the frequency for  │             │
    │ the concerned level of        │             │
    │ the frequency distribution    │             │
    │ table                         │             │
    └───────────────────────────────┘             │
                                                   │
                    ┌──────────────────────────────┘
                    ▼
                ╭───────╮
                │  End  │
                ╰───────╯
```

Fig.4(a)

640

480

(1,240) (2,240)

(639,240) (640,240)

Detection line

x

y

Detection pixel
movement direction

Fig.4(b)

Frequency Distribution Table

| Level | Pixel Value Difference Range | Added Total (Frequency) |
|---|---|---|
| 16 | 240~255 | |
| 15 | 224~239 | |
| 6 | | |
| 5 | 64~79 | |
| 4 | 48~63 | |
| 3 | 32~47 | |
| 2 | 16~31 | |
| 1 | 0~15 | |

Fig.5

Sample

Sample

>Sample-1
>Sample-2
>Sample-3
>Sample-4
>Sample-5
>Sample-6
>Sample-7
>Sample-8
>Sample-9
>Sample-10

Detection line P1

Text Image Example

O1

# Fig.6

Frequency Distribution Table Q1

| Level | Pixel Value Difference Range | Added Total (Frequency) |
|-------|------------------------------|-------------------------|
| 16 | 240~255 | 80 |
| 15 | 224~239 | 0 |
| 14 | 208~223 | 0 |
| 13 | 192~207 | 0 |
| 12 | 176~191 | 0 |
| 11 | 160~175 | 0 |
| 10 | 144~159 | 0 |
| 9 | 128~143 | 0 |
| 8 | 112~127 | 0 |
| 7 | 96~111 | 0 |
| 6 | 80~95 | 0 |
| 5 | 64~79 | 0 |
| 4 | 48~63 | 0 |
| 3 | 32~47 | 0 |
| 2 | 16~31 | 20 |
| 1 | 0~15 | 540 |

Fig.7

Histogram R1

EP 1 585 053 A2

## Fig.8

Design Image Example

Detection line P2

O2

EP 1 585 053 A2

## Fig.9

Frequency Distribution Table Q2

| Level | Pixel Value Difference Range | Added Total (Frequency) |
|---|---|---|
| 16 | 240~255 | 0 |
| 15 | 224~239 | 0 |
| 14 | 208~223 | 0 |
| 13 | 192~207 | 0 |
| 12 | 176~191 | 0 |
| 11 | 160~175 | 0 |
| 10 | 144~159 | 0 |
| 9 | 128~143 | 0 |
| 8 | 112~127 | 0 |
| 7 | 96~111 | 0 |
| 6 | 80~95 | 0 |
| 5 | 64~79 | 10 |
| 4 | 48~63 | 20 |
| 3 | 32~47 | 40 |
| 2 | 16~31 | 90 |
| 1 | 0~15 | 480 |

Fig.10

Histogram R2

EP 1 585 053 A2

# Fig.11

Image Distinguishing
Process

Calculation of frequency total Sf with
totaling of frequencies of each level for which
the level number is 8 or greater — S310

S320

Y          $Sf > Th$ ?          N

S330                                S340

Distinguished as          Distinguished as
a notated image          a non-notated image

End